# EUROPEAN PATENT APPLICATION

(11) **EP 4 651 572 A1**
(43) Date of publication of application: **19.11.2025**
(21) Application number: 23931837.1
(22) Date of filing: 13.12.2023
(51) Int. Cl.: H04W 52/02

(54) **TRANSMISSION METHOD, FIRST COMMUNICATION NODE, SECOND COMMUNICATION NODE, AND STORAGE MEDIUM**

(30) Priority: 03.04.2023 CN 202310365756
(71) Applicant: ZTE Corporation, Shenzhen, Guangdong 518057 (CN)
(72) Inventor: YANG, Weiwei, Shenzhen, Guangdong 518057 (CN); DAI, Bo, Shenzhen, Guangdong 518057 (CN); LIU, Kun, Shenzhen, Guangdong 518057 (CN); HU, Youjun, Shenzhen, Guangdong 518057 (CN); CHEN, Mengzhu, Shenzhen, Guangdong 518057 (CN)
(74) Representative: Aipex B.V.
(86) International application number: PCT/CN2023/138384
(87) International publication number: WO 2024/207792

(57) **Abstract**

Provided are a transmission method, a first communication node, a second communication node, and a storage medium. A transmission method applied to the first communication node includes determining a wake-up signal at least including wake-up data; and sending the wake-up signal.

## Description

### TECHNICAL FIELD

The present application relates to the field of communication technology, for example, a transmission method, a first communication node, a second communication node, and a storage medium.

### BACKGROUND

Wireless communication technology refers to long-distance transmission communication between multiple nodes without propagation via conductors or cables. High-speed and low-latency wireless communications relies on efficient network resource management and allocation between one or more user equipments and one or more radio access network nodes (including, but not limited to, base stations). Next-generation networks are expected to provide high-speed, low-latency, and ultra-reliable communication capabilities to satisfy the requirements of different industries and users. However, as a terminal device has more and more functions, the power consumption of the terminal device is relatively high, reducing the battery life of the terminal device.

### SUMMARY

The present application provides a transmission method, a first communication node, a second communication node, and a storage medium.

In a first aspect, an embodiment of the present application provides a transmission method applied to a first communication node. The method includes the following:

A wake-up signal is determined, where the wake-up signal at least includes a wake-up preamble and wake-up data.

The wake-up signal is sent.

In a second aspect, an embodiment of the present application provides a transmission method applied to a second communication node. The method includes the following operations.

A wake-up signal is received, where the wake-up signal includes at least wake-up data.

An operating state of the second communication node is determined according to indication information and the wake-up signal.

In a third aspect, an embodiment of the present application provides a first communication node. The first communication node includes one or more processors and a storage apparatus.

The storage apparatus is configured to store one or more programs.

When executed by the one or more processors, the one or more programs cause the one or more processors to perform the method in the first aspect of the present application.

In a fourth aspect, an embodiment of the present application provides a second communication node. The second communication node includes one or more processors and a storage apparatus.

The storage apparatus is configured to store one or more programs.

When executed by the one or more processors, the one or more programs cause the one or more processors to perform the method in the second aspect of the present application.

In a fifth aspect, an embodiment of the present application provides a storage medium having a computer program stored thereon, where the computer program, when executed by a processor, causes the processor to perform the method of an embodiment of the present application.

### BRIEF DESCRIPTION OF DRAWINGS

FIG. 1 is a flowchart of a transmission method according to an embodiment of the present application.
FIG. 2 is a structural diagram of a transmission system according to an embodiment of the present application.
FIG. 3 is a flowchart of another transmission method according to an embodiment of the present application.
FIG. 4A is a structural diagram of a wake-up signal according to an embodiment of the present application.
FIG. 4B is a schematic diagram of wake-up data according to an embodiment of the present application.
FIG. 4C is another schematic diagram of wake-up data according to an embodiment of the present application.
FIG. 4D is another schematic diagram of wake-up data according to an embodiment of the present application.
FIG. 4E is another schematic diagram of wake-up data according to an embodiment of the present application.
FIG. 4F is another schematic diagram of wake-up data according to an embodiment of the present application.
FIG. 4G is another schematic diagram of wake-up data according to an embodiment of the present application.
FIG. 4H is another schematic diagram of wake-up data according to an embodiment of the present application.
FIG. 5 is a structural diagram of a transmission apparatus according to an embodiment of the present application.
FIG. 6 is a structural diagram of another transmission apparatus according to an embodiment of the present application.
FIG. 7 is a structural diagram of a first communication node according to an embodiment of the present application.
FIG. 8 is a structural diagram of a second communication node according to an embodiment of the present application.

### DETAILED DESCRIPTION

To make the objects, technical solutions, and advantages of the present application more apparent, embodiments of the present application are described hereinafter in detail in conjunction with drawings. It is to be noted that if not in collision, the embodiments of the present application and features therein may be combined with each other in any manner.

The steps illustrated in the flowcharts among the drawings may be performed by, for example, a computer system capable of executing a set of computer-executable instructions. Moreover, although logical sequences are illustrated in the flowcharts, in some cases, the steps illustrated or described may be performed in sequences different from those described herein.

Terms such as "first" and "second" in the present application are used for distinguishing between similar objects and are not necessarily used for describing a particular sequence or order.

To satisfy a requirement on a battery life, an ultra-low-power wake-up mechanism is introduced in the present application, that is, a user uses a separate receiver to receive a low-power wake-up signal and wakes up a master receiver through the wake-up signal to perform data transmission and data reception. When a terminal device (such as a user equipment (UE)) fails to detect the low-power wake-up signal, the master receiver is in a deep sleep state, further reducing the power consumption of the terminal device (also referred to as a terminal).

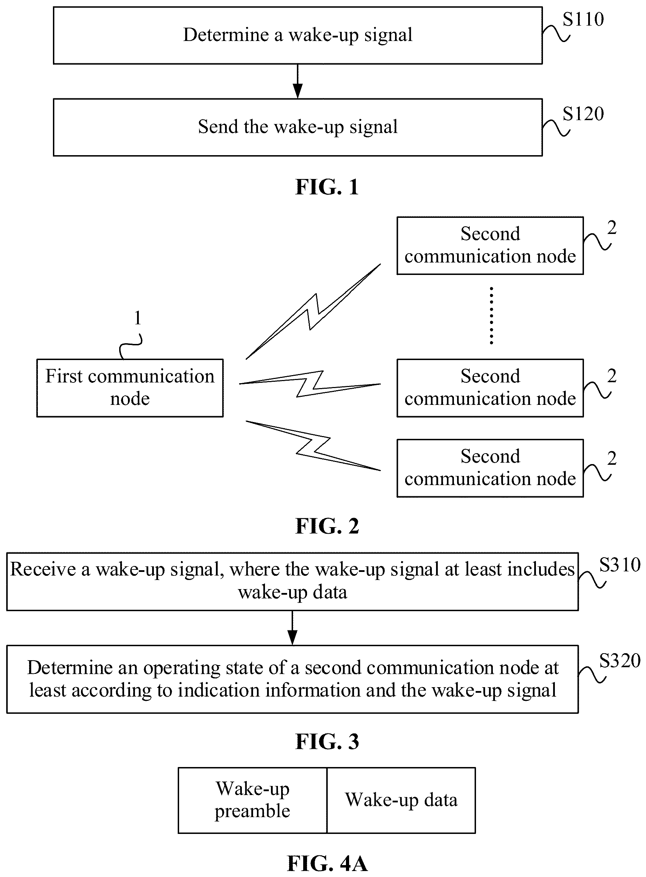

In an example embodiment, FIG. 1 is a flowchart of a transmission method according to an embodiment of the present application. The method is applied to the reduction of the power consumption of a second communication node. The method may be performed by a transmission apparatus which may be implemented by software and/or hardware and integrated into a first communication node. The first communication node may be a base station.

FIG. 2 is a structural diagram of a transmission system according to an embodiment of the present application. The transmission system includes a first communication node 1 and one or more second communication nodes 2, where the first communication node 1 may interact with the second communication nodes 2 about a wake-up signal, so as to reduce the power consumption of the second communication nodes 2.

As shown in FIG. 1, the transmission method according to the embodiment of the present application includes S110 and S120.

In S110, the wake-up signal is determined, where the wake-up signal includes at least wake-up data.

The wake-up signal may be understood as a signal sent to wake up the second communication node, for example, a signal for waking up a master receiver in the second communication node. The master receiver may be considered as a primary receiver/main receiving module in the second communication node. The wake-up data may be considered as data indicating wake-up. The wake-up signal may further include a wake-up preamble. A function of the wake-up preamble may be synchronization or used for indicating decoding to obtain the wake-up data.

In S110, the wake-up signal may be determined according to a paging/scheduling situation to indicate an operating state of the second communication node, for example, indicate whether the master receiver in the second communication node is turned on to receive data, indicate whether the second communication node receives a paging message, indicating whether the second communication node monitors a physical downlink control channel (PDCCH), or indicate whether the second communication node sends a physical random access channel (PRACH).

Specific contents included in the wake-up data are not limited here. For example, the wake-up data may include one or more of a wake-up indication of the second communication node, a group identity, or an intra-group wake-up indication corresponding to the second communication node.

The length of the wake-up data is not limited here. For example, the length of the wake-up data may be one of a first length, a second length, ..., or a Z-th length. The first length, the second length, ..., and the Z-th length are different lengths. Alternatively, the length of the wake-up data may be a fixed length or a length configured via signaling.

In S120, the wake-up signal is sent.

After the wake-up signal is determined, the wake-up signal may be sent in S120 so that after receiving the wake-up signal, the second communication node can determine the operating state of the second communication node at least according to the wake-up signal.

In the transmission method of the present application, the first communication node determines and sends the wake-up signal so that the operating state of the second communication node is flexibly switched under the control of the wake-up signal sent by the first communication node, thereby reducing the power consumption of the second communication node and increasing the battery life of the second communication node.

Based on the preceding embodiment, variant embodiments of the preceding embodiment are provided. It is to be noted that for ease of description, only differences from the preceding embodiment are described in the variant embodiments.

In an embodiment, the wake-up data at least includes wake-up indications of N second communication nodes, where a value of N includes at least one of: a fixed value, a preset value, a value indicated via signaling, or the number of second communication nodes to be woken up.

The wake-up indication may be considered as an indication for waking up the second communication node. The wake-up data may include wake-up indications of one or more second communication nodes. The number of multiple second communication nodes may be N, where N may include at least one of the fixed value, the preset value, the value indicated via signaling, or the number of second communication nodes to be woken up.

In an embodiment, the wake-up indication is one of: an indication of whether the corresponding second communication node is woken up; an indication of a position of the wake-up indication in the wake-up data; an indication of a position of a woken second communication node in the N second communication nodes; or a first identity of the second communication node.

In an embodiment, the wake-up indication is 1 bit in length for indicating whether the corresponding second communication node is woken up.

The wake-up indication of each second communication node may be 1 bit in length, and different values of the wake-up indication may indicate whether the corresponding second communication node is woken up. When the value of the wake-up indication is equal to 1, the wake-up indication may represent that the corresponding second communication node is woken up. When the value of the wake-up indication is equal to 0, the wake-up indication may represent that the corresponding second communication node is not woken up. A correspondence relationship between the value and the wake-up is not limited here.

In this embodiment, the second communication node may determine a position n of the wake-up indication among N wake-up indications according to indication information so that the second communication node can determine the operating state of the second communication node according to a value of the n-th bit of the wake-up data.

In an embodiment, the wake-up indication is k bits in length for indicating the position of the wake-up indication in the wake-up data.

In this embodiment, the second communication node may determine the wake-up indication according to the indication information and determine the operating state of the second communication node according to whether the wake-up data includes the corresponding wake-up indication. During the determination of whether the wake-up data includes the corresponding wake-up indication, the wake-up signal may be parsed every k bits. The number of bits every which the wake-up signal is parsed is the same as the number of bits occupied by the wake-up indication.

In an embodiment, the wake-up indication is k bits in length, that is, the first identity of the second communication node, and the first identity corresponding to the second communication node has the k bits. The first identity is used for identifying the second communication node.

In an embodiment, the wake-up data may include first identities of the N second communication nodes. After determining the first identity according to the indication information, the second communication node may parse the wake-up data every k bits and determine whether the wake-up data includes the first identity to determine the operating state of the second communication node. In this embodiment, the wake-up data may have a fixed length or may have one of multiple lengths.

In an embodiment, in addition to the first identity, the indication information acquired by the second communication node may include a starting position and/or an ending position of the first identity so that the second communication node can directly acquire, according to the starting position and/or the ending position, bits whose number is the same as the number of bits of the first identity to determine the operating state of the second communication node.

In an embodiment, the second communication node acquires the first identity and the starting position of the first identity according to the indication information, and the second communication node may determine whether k bits after the starting position in the wake-up data are the first identity and determine the operating state of the second communication node according to a result of whether the k bits are the first identity.

In an embodiment, the second communication node acquires the first identity and the ending position of the first identity according to the indication information, and the second communication node may determine whether k bits before the ending position in the wake-up data are the first identity and determine the operating state of the second communication node according to a result of whether the k bits are the first identity.

In the preceding embodiment, the second communication nodes may correspond to the same value or different values of k.

In an embodiment, the wake-up data at least includes one of the group identity or the intra-group wake-up indication corresponding to the second communication node.

The group identity may be considered as group indications of M groups, and a group indication may indicate whether a group includes a second communication node to be woken up or may indicate a group index corresponding to a group where a second communication node to be woken up is located.

The intra-group wake-up indication corresponding to the second communication node may be an indication of an intra-group position of the second communication node or a second identity corresponding to the second communication node.

After acquiring the wake-up data, the second communication node may determine the operating state of the second communication node according to the group identity and the intra-group indication in the wake-up data.

In an embodiment, the group identity includes the group indications corresponding to the M groups, and a value of M includes at least one of a fixed value, a preset value, or a value indicated via signaling.

In an embodiment, the group indication is 1 bit in length for indicating whether the group includes the second communication node to be woken up.

In the case where a value of a bit corresponding to the group indication is equal to 1, it may indicate that the group includes the second communication node to be woken up. In the case where the value of the bit corresponding to the group indication is equal to 0, it may indicate that the group includes no second communication node to be woken up. M is a positive integer.

In an embodiment, the group indication is one of: an indication of whether the group includes the second communication node to be woken up; or an indication of the group index corresponding to the group where the second communication node to be woken up is located.

In an embodiment, the group indication is h bits in length for indicating the index corresponding to the group where the second communication node to be woken up is located.

The group index indicates an index of the group where the second communication node is located and may be considered as a label of the group.

In an embodiment, the intra-group wake-up indication is one of an indication of whether the corresponding second communication node in the group is woken up; or the second identity of the second communication node.

In an embodiment, the length of the wake-up data is one of the first length, the second length, ..., or the Z-th length, where the Z-th length is a preset value or a value configured via signaling, and Z is a positive integer.

In an embodiment, the length of the wake-up data is a fixed value.

In an embodiment, the length of the wake-up data is a value configured via signaling.

In an embodiment, the length of the wake-up data is a value indicated via signaling carried in the wake-up preamble.

In an embodiment, the method further includes: sending the indication information to the second communication node via first signaling, where the indication information includes at least one of: position information of the second communication node, the first identity of the second communication node, the starting position of the first identity, the ending position of the first identity, a group index corresponding to the second communication node, an intra-group position corresponding to the second communication node in a group, or an intra-group second identity corresponding to the second communication node, and the first signaling includes at least one of system information block (SIB) signaling or radio resource control (RRC) signaling.

The indication information may be considered as information indicated by the first communication node to the second communication node, and the indication information may be used for parsing the wake-up signal.

The position information of the second communication node may be considered as information about a position of a wake-up indication of the second communication node in the wake-up signal, also referred to as position indication information. The second communication node may determine the wake-up indication at the position of the wake-up data indicated by the position information according to the position information of the second communication node and determine the operating state of the second communication node according to the wake-up indication.

The group index may be considered as an index corresponding to the second communication node. If the group index is 1, the second communication node may determine the operating state of the second communication node according to a value of the first bit among the group indications or determine the operating state of the second communication node according to whether the group indications include 1.

The intra-group position may be considered as a position corresponding to the second communication node in intra-group indications. An intra-group position being 1 corresponds to the first bit among the intra-group indications, and the operating state of the second communication node may be determined according to a value of the corresponding bit.

The intra-group second identity may be the second identity of the second communication node among the intra-group indications.

In an embodiment, the wake-up data further includes first information including at least one of: a system message change indication, a cell index, an Earthquake and Tsunami Warning System (ETWS) and Commercial Mobile Alert Service (CMAS) message indication, a subsequent detection stop indication, or a tracking reference signal (TRS) indication.

In an example embodiment, the present application provides a transmission method. FIG. 3 is a flowchart of another transmission method according to an embodiment of the present application. The method is applied to the reduction of the power consumption of a second communication node and may be performed by a transmission apparatus of the present application. The transmission apparatus may be implemented by software and/or hardware and integrated into the second communication node. The second communication node may be a terminal device. For non-exhaustive details of this embodiment, reference may be made to the preceding embodiment, and the details are not repeated here.

As shown in FIG. 3, the transmission method according to this embodiment includes S310 and S320.

In S310, a wake-up signal is received, where the wake-up signal at least includes wake-up data.

In S310, the wake-up signal transmitted by a first communication node may be received.

In S320, an operating state of the second communication node is determined at least according to indication information and the wake-up signal.

In S320, the wake-up signal may be parsed according to the indication information so that the operating state of the second communication node can be determined.

In the embodiment of the present application, the operating state of the second communication node can be determined according to the indication information and the wake-up signal so that the second communication node can flexibly determine whether to be woken up, reducing the power consumption of the second communication node.

Based on the preceding embodiment, variant embodiments of the preceding embodiment are provided. It is to be noted that for ease of description, only differences from the preceding embodiment are described in the variant embodiments.

In an embodiment, the indication information is obtained via first signaling, where the first signaling includes at least one of SIB signaling or RRC signaling.

In an embodiment, the indication information includes at least one of: position indication information, a first identity, a starting position of a first identity, an ending position of a first identity, a group index, an intra-group position, or a second identity.

The position indication information may correspond to position information of the second communication node.

In an embodiment, the indication information includes the position indication information, and the operation of determining the operating state of the second communication node according to at least the indication information and the wake-up signal includes the following:
A wake-up indication at a position of the wake-up data indicated by the position indication information is acquired.

The operating state of the second communication node is determined according to the wake-up indication.

The wake-up indication of the second communication node in the wake-up data may be acquired according to the position indication information. The operating state of the second communication node is determined according to the wake-up indication. For example, the operating state of the second communication node is determined according to a value of the wake-up indication. A correspondence relationship between the value and the operating state is not limited here.

In an embodiment, the indication information includes the position indication information, and the operation of determining the operating state of the second communication node at least according to the indication information and the wake-up signal includes the following:
The operating state of the second communication node is determined according to whether the position indication information is included in the wake-up data.

In this embodiment, the position indication information is k bits in length. The second communication node parses the received wake-up data every k bits and determines whether the position indication information is included in the wake-up data.

In an embodiment, the indication information includes the first identity corresponding to the second communication node, and the operation of determining the operating state of the second communication node at least according to the indication information and the wake-up signal includes the following:
The operating state of the second communication node is determined according to whether the first identity is included in the wake-up data.

After acquiring the first identity according to the indication information, the second communication node may parse the wake-up data by the unit of the number of bits occupied by the first identity, determine whether the first identity is included in the wake-up data, and determine the operating state based on a determination result.

In an embodiment, the indication information includes the first identity corresponding to the second communication node and the starting position of the first identity, and the operation of determining the operating state of the second communication node at least according to the indication information and the wake-up signal includes the following:
The operating state of the second communication node is determined according to whether the first identity exists after the starting position of the first identity in the wake-up data.

The second communication node determines the first identity and the starting position of the first identity according to the indication information, reads data of the number of bits occupied by the first identity after the starting position in the wake-up data, determines whether the read data is the first identity, and determines the operating state of the second communication node based on a determination result.

In an embodiment, the indication information includes the first identity corresponding to the second communication node and the ending position of the first identity, and the operation of determining the operating state of the second communication node at least according to the indication information and the wake-up signal includes the following:
The operating state of the second communication node is determined according to whether the first identity exists before the ending position of the first identity in the wake-up data.

In this embodiment, the indication information includes the ending position, and the wake-up data is parsed with reference to the ending position. For example, data before the ending position in the wake-up data is acquired, whether the data is the first identity is determined, and the operating state of the second communication node is determined according to a determination result.

In an embodiment, the indication information includes the group index, and the operation of determining the operating state of the second communication node at least according to the indication information and the wake-up signal includes the following:
The operating state of the second communication node is determined according to a value of a bit corresponding to the group index in the wake-up data.

The group index indicates the corresponding bit in the wake-up data, and the operating state of the second communication node may be determined according to the value of the corresponding bit. In the case where the group index has a value of 1, it may be considered that the second communication node is to be woken up.

In an embodiment, the indication information includes the group index and the intra-group position, and the operation of determining the operating state of the second communication node at least according to the indication information and the wake-up signal includes one of the following:
The operating state of the second communication node is determined according to the value of the bit corresponding to the group index and a value of a bit corresponding to the intra-group position in the wake-up data.

The operating state of the second communication node is determined according to whether the group index is included in the wake-up data.

The operating state of the second communication node is determined according to whether the group index is included in the wake-up data and a value of a bit corresponding to the intra-group position in the wake-up data.

In this embodiment, the operating state may be determined according to the group index and the intra-group position, where the value of the bit corresponding to the group index may indicate whether a group includes a second communication node to be woken up. The intra-group position may indicate which second communication node in the group is to be woken up. The operating state of the second communication node may be determined according to the values corresponding to the group index and the intra-group position. The bit corresponding to the group index may be a bit corresponding to a group identity in the wake-up data.

In the case where the wake-up data includes a group index, it may be determined whether the wake-up data includes the group index included in the indication information. If the wake-up data includes the group index included in the indication information, it may be determined that the second communication node is to be woken up.

In the case where the wake-up data includes a group index, it may be determined whether the wake-up data includes the group index. If the wake-up data includes the group index, the value of the bit corresponding to the intra-group position in the wake-up data may be further determined, that is, the operating state is determined according to the value of the bit corresponding to the intra-group position.

In an embodiment, the indication information includes the group index and the second identity, and the operation of determining the operating state of the second communication node at least according to the indication information and the wake-up signal includes one of the following:
The operating state of the second communication node is determined according to whether the group index is included in the wake-up data.

The operating state of the second communication node is determined according to whether the group index is included in the wake-up data and whether the second identity is included in the wake-up data.

The second communication node may determine the group index and the second identity according to the indication information. When the group index is included in the wake-up data, it may be determined that the second communication node is to be woken up; otherwise, it may be determined that the second communication node is not to be woken up.

When the group index is included in the wake-up data, it may be further determined whether the second identity is included in the wake-up data. If the second identity is included in intra-group indications in the wake-up data, it may be considered that the second communication node is to be woken up. If the second identity is not included in the intra-group indications in the wake-up data, it may be considered that the second communication node is not to be woken up.

The transmission methods of the present application may be considered as methods for sending and receiving a wake-up signal. The present application is illustratively described below.

In an embodiment, it is assumed that a base station sends a wake-up signal through binary on-off keying (OOK) modulation. FIG. 4A is a structural diagram of a wake-up signal according to an embodiment of the present application. As shown in FIG. 4A, the wake-up signal includes a wake-up preamble and wake-up data. The above is only an example, and other modulation manners in which the base station sends the wake-up signal are not excluded in the present application.

The wake-up data has N bits corresponding to wake-up indications of N terminals (that is, second communication nodes). That is, a wake-up indication corresponding to a terminal is 1 bit, a value of 1 represents wake-up, and a value of 0 represents no wake-up, and vice versa. N has a fixed value, a value indicated via SIB/RRC signaling, or a preset value.

The terminal obtains a position indication according to first signaling, that is, a position n of the wake-up indication of the terminal among N wake-up indications. The terminal monitors the wake-up signal and determines, according to a value corresponding to the n-th bit, whether to monitor a paging occasion (PO)/send a PRACH. Specifically, when the value is 1, the terminal monitors the PO/sends the PRACH, and when the value is 0, the terminal does not monitor the PO/send the PRACH. The first signaling includes at least one of RRC signaling or SIB signaling.

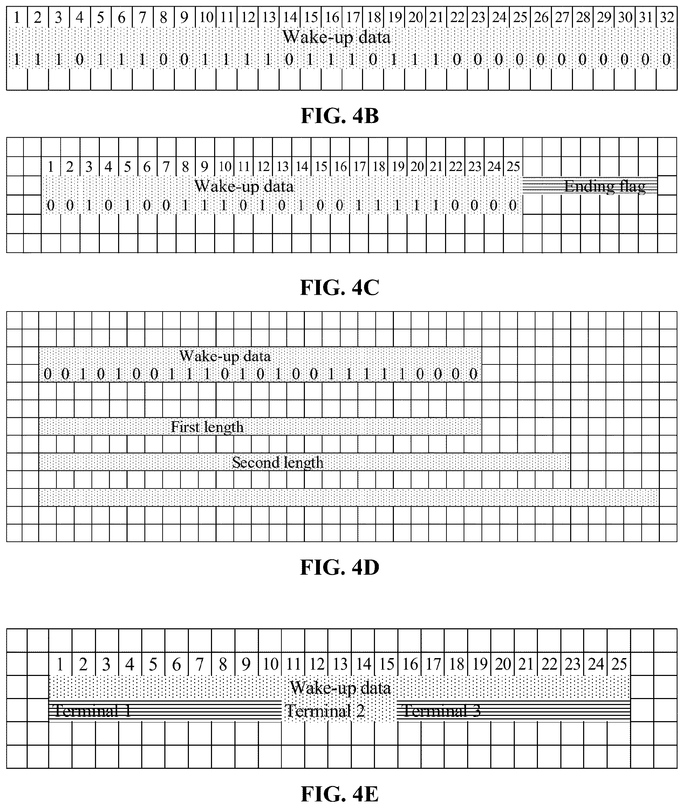

FIG. 4B is a schematic diagram of wake-up data according to an embodiment of the present application. Assuming that N = 32, the base station sends the wake-up signal according to a paging situation. Assuming that terminal 1 obtains that n = 1 according to the first signaling, since the first bit of the wake-up signal corresponds to 1, the terminal monitors the PO/sends the PRACH. Assuming that terminal 2 obtains that n = 14 according to the first signaling (such as the RRC signaling), since the 14th bit of the wake-up signal corresponds to 0, the terminal does not monitor the PO/send the PRACH.

In an embodiment, it is assumed that a base station sends a wake-up signal through OOK modulation, the wake-up signal includes a wake-up preamble and wake-up data, and the wake-up data at least carries wake-up indications of N terminals to be woken up, where a wake-up indication indicates a position n of the wake-up indication of a terminal in the wake-up data. The above is only an example, and other modulation manners in which the base station sends the wake-up signal are not excluded in the present application.

The terminal obtains the corresponding wake-up indication according to first signaling. The terminal monitors the wake-up signal and determines, according to whether the wake-up signal includes the corresponding wake-up indication, whether to monitor a PO/send a PRACH. The first signaling includes at least one of RRC signaling or SIB signaling.

FIG. 4C is another schematic diagram of wake-up data according to an embodiment of the present application. Refer to FIG. 4C, it is assumed that k is 5 bits, the base station needs to page 5 terminals, and n corresponding to the terminals is 5, 7, 10, 15, and 16. Assuming that terminal 1 corresponds to n = 7, the terminal monitors the wake-up signal and parses the wake-up signal every 5 bits, and the wake-up signal includes 00111 so that the terminal monitors the PO/sends the PRACH. Assuming that terminal 2 corresponds to n = 15, the terminal monitors the wake-up signal and parses the wake-up signal every 5 bits, and the wake-up signal includes 01111 so that the terminal monitors the PO/sends the PRACH. Assuming that terminal 3 corresponds to n = 14, the terminal monitors the wake-up signal and parses the wake-up signal every 5 bits, and 01110 is not parsed until an ending flag so that the terminal does not monitor the PO/send the PRACH.

In an embodiment, it is assumed that a base station sends a wake-up signal through OOK modulation, the wake-up signal includes a wake-up preamble and wake-up data, and the wake-up data at least carries first identities of N terminals. A first identity corresponding to each terminal is k bits, and the terminal obtains the corresponding first identity according to first signaling. The terminal monitors the wake-up signal and determines, according to whether the wake-up signal includes the corresponding first identity, whether to monitor a PO/send a PRACH. The first signaling includes at least one of RRC signaling or SIB signaling. The above is only an example, and other modulation manners in which the base station sends the wake-up signal are not excluded in the present application.

Referring to FIG. 4C, it is assumed that the first identity is 5 bits, the base station needs to page 5 terminals, and the first identities corresponding to the terminals are 5, 7, 10, 15, and 16. Assuming that terminal 1 obtains the corresponding first identity 7 according to the first signaling, the terminal monitors the wake-up signal and parses the wake-up signal every 5 bits, and 7 is parsed from the wake-up signal so that the terminal monitors the PO/sends the PRACH. Assuming that terminal 2 obtains the corresponding first identity 14 according to the first signaling, the terminal monitors the wake-up signal and parses the wake-up signal every 5 bits, and 14 is not parsed until an ending flag so that the terminal does not monitor the PO/send the PRACH.

In an embodiment, it is assumed that a base station sends a wake-up signal through OOK modulation, the wake-up signal includes a wake-up preamble and wake-up data, and the wake-up data at least carries first identities of N terminals. A first identity corresponding to each terminal is k bits, and the terminal obtains the corresponding first identity according to first signaling. The terminal monitors the wake-up signal and determines, according to whether the wake-up signal includes the corresponding first identity, whether to monitor a PO/send a PRACH. The first signaling includes at least one of RRC signaling or SIB signaling. The length of the wake-up data is one of {a first length, a second length, ..., a Z-th length}, where {the first length, the second length, ..., the Z-th length} are preset values. The above is only an example, and other modulation manners in which the base station sends the wake-up signal are not excluded in the present application.

FIG. 4D is another schematic diagram of wake-up data according to an embodiment of the present application. Referring to FIG. 4D, it is assumed that the first identity is 5 bits, the base station needs to page 5 terminals, and the first identities corresponding to the terminals are 5, 7, 10, 15, and 16. Assuming that candidate lengths of the wake-up data are {a first length of 25, a second length of 30, a third length of 35}, the base station selects the first length when sending the wake-up data. The selected length may be greater than or equal to the number of bits to be sent. In this embodiment, the number of bits to be sent is 5 × 5, so the first length is selected.

Assuming that terminal 1 obtains the corresponding first identity 7 according to the first signaling, the terminal monitors the wake-up signal and parses the wake-up signal every 5 bits, and 7 is parsed from the wake-up signal so that the terminal monitors the PO/sends the PRACH. Assuming that terminal 2 obtains the corresponding first identity 14 according to the first signaling, the terminal monitors the wake-up signal and parses the wake-up signal every 5 bits, and 14 is not parsed until all the first length, the second length, and the third length are used for parsing so that the terminal does not monitor the PO/send the PRACH.

When parsing the wake-up data, the terminal performs blind detection using the first length, the second length, the third length, and a fourth length separately.

In an embodiment, it is assumed that a base station sends a wake-up signal through OOK modulation, the wake-up signal includes a wake-up preamble and wake-up data, and the wake-up data at least carries first identities of N terminals. A terminal obtains a corresponding first identity and a starting position of the identity according to first signaling. The terminal monitors the wake-up signal and determines, according to whether the corresponding first identity exists after the starting position of the identity in the wake-up signal, whether to monitor a PO/send a PRACH. The first signaling includes at least one of RRC signaling or SIB signaling. The above is only an example, and other modulation manners in which the base station sends the wake-up signal are not excluded in the present application.

FIG. 4E is another schematic diagram of wake-up data according to an embodiment of the present application. Referring to FIG. 4E, it is assumed that the base station needs to page 3 terminals, the first identity corresponding to terminal 1 is 10 bits, the first identity corresponding to terminal 2 is 5 bits, and the first identity corresponding to terminal 3 is 10 bits. Assuming that terminal 1 obtains that the first identity is 10 bits and the starting position of the identity is the first bit according to the first signaling, the terminal monitors the wake-up signal and obtains the corresponding first identity from 10 bits after the starting position of the identity in the wake-up signal so that the terminal monitors the PO/sends the PRACH. Assuming that terminal 2 obtains that the first identity is 5 bits and the starting position of the identity is the 11-th bit according to the first signaling, the terminal monitors the wake-up signal and obtains the corresponding first identity from 5 bits after the starting position of the identity in the wake-up signal so that the terminal monitors the PO/sends the PRACH. Assuming that terminal 4 obtains that the first identity is 5 bits and the starting position of the identity is the 16th bit according to the first signaling, the terminal monitors the wake-up signal and cannot obtain the corresponding first identity from 5 bits after the starting position of the identity in the wake-up signal so that the terminal does not monitor the PO/send the PRACH.

In an embodiment, it is assumed that a base station sends a wake-up signal through OOK modulation, the wake-up signal includes a wake-up preamble and wake-up data, and the wake-up data at least carries first identities of N terminals. A terminal obtains a corresponding first identity and an ending position of the identity according to first signaling. The terminal monitors the wake-up signal and determines, according to whether the corresponding first identity exists before the ending position of the identity in the wake-up signal, whether to monitor a PO/send a PRACH. The first signaling includes at least one of RRC signaling or SIB signaling. The above is only an example, and other modulation manners in which the base station sends the wake-up signal are not excluded in the present application.

Referring to FIG. 4E, it is assumed that the base station needs to page 3 terminals, the first identity corresponding to terminal 1 is 10 bits, the first identity corresponding to terminal 2 is 5 bits, and the first identity corresponding to terminal 3 is 10 bits. Assuming that terminal 1 obtains that the first identity is 10 bits and the ending position of the identity is the 10th bit according to the first signaling, the terminal monitors the wake-up signal and obtains the corresponding first identity from 10 bits before the ending position of the identity in the wake-up signal so that the terminal monitors the PO/sends the PRACH. Assuming that terminal 2 obtains that the first identity is 5 bits and the ending position of the identity is the 15th bit according to the first signaling, the terminal monitors the wake-up signal and obtains the corresponding first identity from 5 bits before the ending position of the identity in the wake-up signal so that the terminal monitors the PO/sends the PRACH. Assuming that terminal 4 obtains that the first identity is 5 bits and the ending position of the identity is the 25th bit according to the first signaling, the terminal monitors the wake-up signal and cannot obtain the corresponding first identity from 5 bits before the ending position of the identity in the wake-up signal so that the terminal does not monitor the PO/send the PRACH.

In an embodiment, it is assumed that a base station sends a wake-up signal through OOK modulation, the wake-up signal includes a wake-up preamble and wake-up data, and the wake-up data at least carries a group identity or a group identity along with intra-group wake-up indications of terminals. When the group identity is equal to 1, it indicates that the group includes a terminal to be woken up. When the group identity is equal to 0, it indicates that the group includes no terminal to be woken up. A terminal obtains a corresponding group index and intra-group position according to first signaling. The terminal monitors the wake-up signal and determines, according to the group identity or the group identity and an intra-group wake-up indication in the wake-up signal, whether to monitor a PO/send a PRACH. The first signaling includes at least one of RRC signaling or SIB signaling. The above is only an example, and other modulation manners in which the base station sends the wake-up signal are not excluded in the present application.

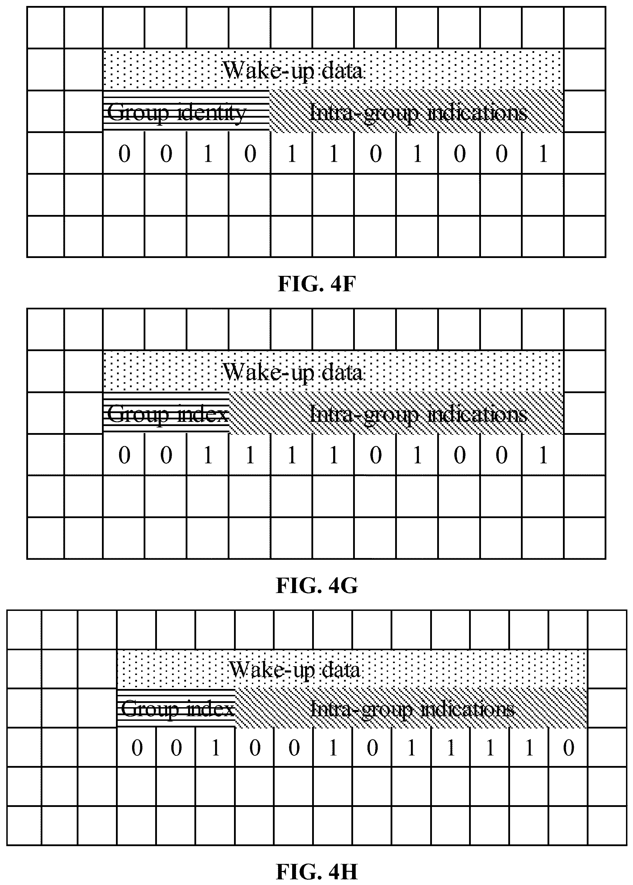

FIG. 4F is another schematic diagram of wake-up data according to an embodiment of the present application. Referring to FIG. 4F, it is assumed that the base station needs to page 4 terminals, the terminals are all in the same group with a group index of 3, and intra-group positions of the 4 terminals are 1, 2, 4, and 8, respectively. Assuming that terminal 1 obtains the corresponding group index of 1 and intra-group position of 1 according to the first signaling, the terminal monitors the wake-up signal, and the first bit in the group identity is 0 so that the terminal does not monitor the PO/send the PRACH. Assuming that terminal 2 obtains the corresponding group index of 3 and intra-group position of 3 according to the first signaling, the terminal monitors the wake-up signal, and the third bit in the group identity is 1 but the third bit in the intra-group indications in the wake-up signal is 0 so that the terminal does not monitor the PO/send the PRACH. Assuming that terminal 3 obtains the corresponding group index of 3 and intra-group position of 1 according to the first signaling, the terminal monitors the wake-up signal, and the third bit in the group identity is 1 and the first bit in the intra-group indications is 1 so that the terminal monitors the PO/sends the PRACH.

In an embodiment, it is assumed that a base station sends a wake-up signal through OOK modulation, the wake-up signal includes a wake-up preamble and wake-up data, and the wake-up data at least carries a group identity and intra-group wake-up indications. The group identity is a group index, and a terminal obtains a corresponding group index and intra-group position according to first signaling. The terminal monitors the wake-up signal and determines, according to whether the wake-up signal includes the corresponding group index or the group index and an intra-group wake-up indication, whether to monitor a PO/send a PRACH. The first signaling includes at least one of RRC signaling or SIB signaling. The above is only an example, and other modulation manners in which the base station sends the wake-up signal are not excluded in the present application.

FIG. 4G is another schematic diagram of wake-up data according to an embodiment of the present application. Referring to FIG. 4G, it is assumed that the base station needs to page 4 terminals, the terminals are all in the same group with a group index of 1, and intra-group positions of the 4 terminals are 1, 2, 4, and 7, respectively. Assuming that terminal 1 obtains the corresponding group index of 1 and intra-group position of 1 according to the first signaling, the terminal monitors the wake-up signal, and the wake-up signal carries the group index of 1 and the first bit in the intra-group indications is 1 so that the terminal monitors the PO/sends the PRACH. Assuming that terminal 2 obtains the corresponding group index of 1 and intra-group position of 4 according to the first signaling, the terminal monitors the wake-up signal, and the wake-up signal carries the group index of 1 and the fourth bit in the intra-group indications is 0 so that the terminal does not monitor the PO/send the PRACH. Assuming that terminal 3 obtains the corresponding group index of 3 and intra-group position of 3 according to the first signaling, the terminal monitors the wake-up signal, and the wake-up signal carries the group index of 1 so that the terminal does not monitor the PO/send the PRACH.

In an embodiment, it is assumed that a base station sends a wake-up signal through OOK modulation, the wake-up signal includes a wake-up preamble and wake-up data, and the wake-up data at least carries a group identity and intra-group second identities for wake-up. The group identity is a group index, and a second identity is g bits. A terminal obtains a corresponding group index and second identity according to first signaling. The terminal monitors the wake-up signal and determines, according to whether the wake-up signal includes the corresponding group identity or the group identity and the second identity, whether to monitor a PO/send a PRACH. The first signaling includes at least one of RRC signaling or SIB signaling. The above is only an example, and other modulation manners in which the base station sends the wake-up signal are not excluded in the present application.

FIG. 4H is another schematic diagram of wake-up data according to an embodiment of the present application. Referring to FIG. 4H, it is assumed that the base station needs to page 3 terminals, the terminals are all in the same group with a group index of 1, and intra-group positions of the 3 terminals are 1, 3, and 6, respectively. Assuming that terminal 1 obtains the corresponding group index of 1 and second identity of 1 according to the first signaling, the terminal monitors the wake-up signal, and the wake-up signal carries the group index of 1 and the second identities include 001 so that the terminal monitors the PO/sends the PRACH. Assuming that terminal 2 obtains the corresponding group index of 1 and second identity of 4 according to the first signaling, the terminal monitors the wake-up signal, and the wake-up signal carries the group index of 1 but the second identities do not include 100 so that the terminal does not monitor the PO/send the PRACH. Assuming that terminal 3 obtains the corresponding group index of 3 and second identity of 3 according to the first signaling, the terminal monitors the wake-up signal, and the wake-up signal carries the group index of 1 so that the terminal does not monitor the PO/send the PRACH.

In the preceding embodiments, the length of the wake-up data is one of {a first length, a second length, ..., a Z-th length}, where {the first length, the second length, ..., the Z-th length} are preset values.

In the preceding embodiments, the length of the wake-up data may be a fixed value.

In the preceding embodiments, the length of the wake-up data may be a value indicated via signaling.

In the preceding embodiments, the length of the wake-up data may be a value indicated via signaling carried in the wake-up preamble.

In an embodiment, it is assumed that a base station sends a wake-up signal through OOK modulation, the wake-up signal includes a wake-up preamble and wake-up data, and the wake-up data carries G-bit system information and H-bit first identities corresponding to terminals, where G and H have fixed values. A terminal obtains a corresponding first identity according to first signaling. The terminal monitors the wake-up signal and determines, according to whether the wake-up signal includes the corresponding first identity, whether to monitor a PO/send a PRACH. The first signaling includes at least one of RRC signaling or SIB signaling.

The system information includes at least one of a system message change indication, a cell index, an ETWS and CMAS message indication, a subsequent detection stop indication, or a TRS indication.

In an embodiment, a base station notifies, through an activation indication, a terminal of whether to enter a low-power wake-up signal (LP-WUS) mode, where the activation indication is sent via second signaling. The terminal determines, according to the activation indication in the second signaling, whether to monitor a PO/send a PRACH. For example, when the activation indication is 1, the terminal enters the LP-WUS mode, that is, monitors a wake-up signal and determines, according to a monitoring result of the wake-up signal, whether to monitor the PO/send the PRACH. When the activation indication is 0, the terminal does not enter the LP-WUS mode, that is, directly monitors the PO. The second signaling is SIB signaling or RRC signaling.

In an embodiment, the base station notifies, through the activation indication, the terminal of whether to enter the LP-WUS mode, where the activation indication is sent via the second signaling. The terminal determines, according to the activation indication in the second signaling and a first rule, whether to monitor the PO/send the PRACH. For example, when the activation indication is 1, the terminal determines, according to the first rule, whether to monitor the PO/send the PRACH. When the activation indication is 0, the terminal directly monitors the PO. The first rule includes at least one of the rules below.

Rule one: When a measured value corresponding to the terminal is greater than a threshold, the terminal enters the LP-WUS mode, that is, the terminal monitors a wake-up signal and determines, according to a monitoring result of the wake-up signal, whether to monitor the PO/send the PRACH; otherwise, the terminal directly monitors the PO.

Rule two: When low-speed evaluation signaling corresponding to the terminal is enabled, the terminal enters the LP-WUS mode, that is, the terminal monitors a wake-up signal and determines, according to a monitoring result of the wake-up signal, whether to monitor the PO/send the PRACH; otherwise, the terminal directly monitors the PO.

Rule three: When cell center evaluation signaling corresponding to the terminal is enabled, the terminal enters the LP-WUS mode, that is, the terminal monitors a wake-up signal and determines, according to a monitoring result of the wake-up signal, whether to monitor the PO/send the PRACH; otherwise, the terminal directly monitors the PO.

Rule four: When a moving speed corresponding to the terminal is less than a threshold, the terminal enters the LP-WUS mode, that is, the terminal monitors a wake-up signal and determines, according to a monitoring result of the wake-up signal, whether to monitor the PO/send the PRACH; otherwise, the terminal directly monitors the PO.

Rule five: When the terminal is at the center of a cell, the terminal enters the LP-WUS mode, that is, the terminal monitors a wake-up signal and determines, according to a monitoring result of the wake-up signal, whether to monitor the PO/send the PRACH; otherwise, the terminal directly monitors the PO.

In the preceding embodiments, the operation of the base station notifying, through the activation indication, the terminal to enter the LP-WUS mode further includes: within a predetermined time T, when the terminal needs to be paged, the base station sending an LP-WUS and sending a terminal identity (such as a user equipment-identity (UE-ID)) on a predetermined PO. The predetermined PO is a PO corresponding to the terminal or a predefined PO, and T is a positive integer greater than or equal to 0.

In the preceding embodiments, the operation of the base station notifying, through the activation indication, the terminal to exit the LP-WUS mode further includes: within the predetermined time T, when the terminal needs to be paged, the base station sending the LP-WUS and sending the UE-ID on the predetermined PO. The predetermined PO is the PO corresponding to the terminal or the predefined PO, and T is a positive integer greater than or equal to 0.

In an embodiment, when the terminal is in the LP-WUS mode and determines to exit the LP-WUS mode according to a second rule, the terminal notifies, through an activation indication in a message A (msgA)/message 3 (msg3), the base station that the terminal exits the LP-WUS mode. For example, when the activation indication is 1, the terminal exits the LP-WUS mode, that is, the terminal does not monitor the LP-WUS and directly monitors the PO; and the base station determines to send a paging message according to the activation indication in the received msgA/msg3, that is, when the activation indication is 1, the base station sends the paging message on the PO; otherwise, the base station sends the LP-WUS and then the paging message or sends the paging message through the LP-WUS.

The second rule includes at least one of the rules below.

When the measured value corresponding to the terminal is less than the threshold, the terminal exits the LP-WUS mode; otherwise, the terminal does not exit the LP-WUS mode.

When the moving speed corresponding to the terminal is greater than a preset value, the terminal exits the LP-WUS mode; otherwise, the terminal does not exit the LP-WUS mode.

When the terminal is determined to be on an edge of the cell, the terminal exits the LP-WUS mode; otherwise, the terminal does not exit the LP-WUS mode.

In an embodiment, when the terminal is in the LP-WUS mode and receives a deactivation indication sent by the base station, the terminal exits the LP-WUS mode, that is, the terminal does not monitor the LP-WUS and directly monitors the PO.

In an embodiment, when the terminal is in the LP-WUS mode and receives the deactivation indication sent by the base station, the terminal determines, according to a predefined rule, whether to exit the LP-WUS mode and notifies, through a deactivation indication in an msgA/msg3, the base station of whether the terminal exits the LP-WUS mode. For example, when the terminal determines not to exit, the deactivation indication is 1, and the base station receives the deactivation indication of 1, sends the LP-WUS and then the paging message or sends the paging message through the LP-WUS. When the terminal determines to exit, the deactivation indication is 0, and the base station receives the deactivation indication of 0 and sends the paging message on the PO.

In an embodiment, the base station indicates a mode of the terminal through a state indication, and the terminal determines, according to the state indication, whether to monitor the PO/send the PRACH. For example, a state indication being 1 represents the LP-WUS mode, and a state indication being 0 represents a conventional mode. The terminal determines, according to the received state indication, whether to monitor the PO/send the PRACH.

In an embodiment, a base station notifies, through a first activation indication, a first terminal of whether to enter an LP-WUS mode, and the first terminal determines, according to the first activation indication, whether to monitor a PO. For example, when the first activation indication is 1, the first terminal monitors a wake-up signal and determines, according to a monitoring result of the wake-up signal, whether to monitor the PO. When the first activation indication is 0, the first terminal directly monitors the PO.

The base station notifies, through a second activation indication, a second terminal of whether to enter the LP-WUS mode, and the second terminal determines, according to the second activation indication, whether to send a PRACH. Specifically, when the second activation indication is 1, the second terminal monitors the wake-up signal and determines, according to the monitoring result of the wake-up signal, whether to send the PRACH. When the second activation indication is 0, the second terminal directly monitors the PO.

The first activation indication and the second activation indication are indicated via SIB signaling and/or RRC signaling.

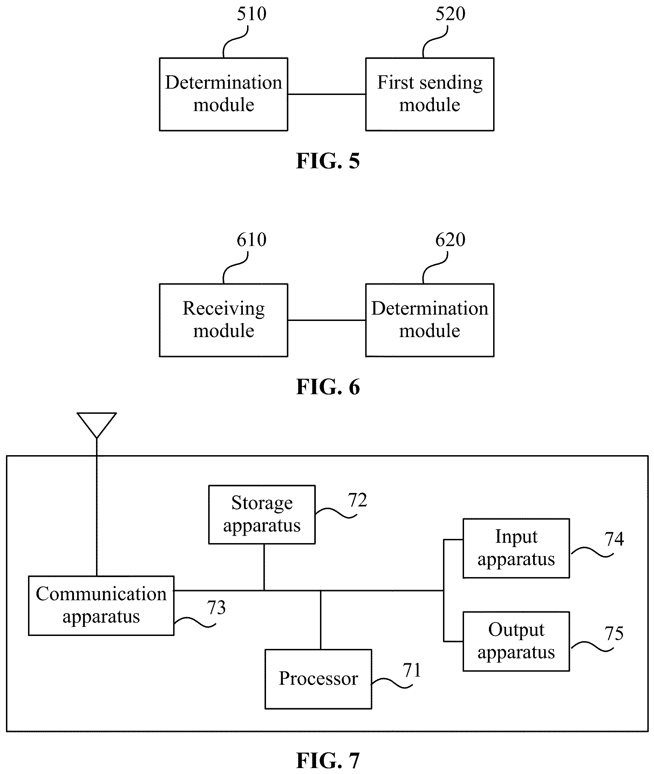

In an example embodiment, the present application provides a transmission apparatus which may be integrated into a first communication node. FIG. 5 is a structural diagram of a transmission apparatus according to an embodiment of the present application. As shown in FIG. 5, the apparatus includes a determination module 510 and a first sending module 520.

The determination module 510 is configured to determine a wake-up signal, and the wake-up signal at least includes wake-up data.

The first sending module 520 is configured to send the wake-up signal.

The transmission apparatus of this embodiment is configured to perform the transmission method of the embodiment shown in FIG. 1. The transmission apparatus of this embodiment has implementation principles and technical effects similar to those of the transmission method of the embodiment shown in FIG. 1, and the details are not repeated here.

Based on the preceding embodiment, variant embodiments of the preceding embodiment are provided. It is to be noted that for ease of description, only differences from the preceding embodiment are described in the variant embodiments.

In an embodiment, the wake-up data at least includes wake-up indications of N second communication nodes, where a value of N includes at least one of a fixed value, a preset value, a value indicated via signaling, or the number of second communication nodes to be woken up.

In an embodiment, each wake-up indication is one of an indication of whether a corresponding second communication node is woken up; an indication of a position of the wake-up indication in the wake-up data; an indication of a position of a woken second communication node in the N second communication nodes; or a first identity of a second communication node.

In an embodiment, the wake-up data includes at least one of a group identity or an intra-group wake-up indication corresponding to a second communication node.

In an embodiment, the group identity includes group indications corresponding to M groups, where a value of M includes at least one of a fixed value, a preset value, or a value indicated via signaling.

In an embodiment, each group indication is one of an indication of whether a group includes a second communication node to be woken up; or an indication of a group index corresponding to a group where a second communication node to be woken up is located.

In an embodiment, the intra-group wake-up indication is one of an indication of whether the corresponding second communication node in the group is woken up; or a second identity of the second communication node.

In an embodiment, the length of the wake-up data is one of a first length, a second length, ..., or a Z-th length, where the Z-th length is a preset value or a value configured via signaling, and Z is a positive integer.

In an embodiment, the length of the wake-up data is a fixed value.

In an embodiment, the length of the wake-up data is a value indicated via signaling.

In an embodiment, the apparatus further includes a second sending module configured to send indication information to a second communication node via first signaling, where the indication information includes at least one of: position information of the second communication node, a first identity of the second communication node, a starting position of a first identity, an ending position of a first identity, a group index corresponding to the second communication node, an intra-group position corresponding to the second communication node in a group, or an intra-group second identity corresponding to the second communication node, and the first signaling includes at least one of SIB signaling or RRC signaling.

In an embodiment, the wake-up data further includes first information including at least one of a system message change indication, a cell index, an ETWS and CMAS message indication, a subsequent detection stop indication, or a TRS indication.

In an example embodiment, an embodiment of the present application provides a transmission apparatus which may be integrated into a second communication node. FIG. 6 is a structural diagram of another transmission apparatus according to an embodiment of the present application. As shown in FIG. 6, the apparatus includes a receiving module 610 and a determination module 620.

The receiving module 610 is configured to receive a wake-up signal, and the wake-up signal at least includes wake-up data.

The determination module 620 is configured to determine an operating state of the second communication node at least according to indication information and the wake-up signal.

The transmission apparatus of this embodiment is configured to perform the transmission method of the embodiment shown in FIG. 3. The transmission apparatus of this embodiment has implementation principles and technical effects similar to those of the transmission method of the embodiment shown in FIG. 3, and the details are not repeated here.

Based on the preceding embodiment, variant embodiments of the preceding embodiment are provided. It is to be noted that for ease of description, only differences from the preceding embodiment are described in the variant embodiments.

In an embodiment, the indication information is obtained via first signaling, where the first signaling includes at least one of SIB signaling or RRC signaling.

In an embodiment, the indication information includes at least one of position indication information, a first identity, a starting position of a first identity, an ending position of a first identity, a group index, an intra-group position, or a second identity.

In an embodiment, the indication information includes the position indication information, and the determination module 620 is configured to perform the operations below.

A wake-up indication at a position of the wake-up data indicated by the position indication information is acquired.

The operating state of the second communication node is determined according to the wake-up indication.

In an embodiment, the indication information includes the position indication information, and the determination module 620 is configured to perform the operation below.

The operating state of the second communication node is determined according to whether the position indication information is included in the wake-up data.

In an embodiment, the indication information includes the first identity corresponding to the second communication node, and the determination module 620 is configured to perform the operation below.

The operating state of the second communication node is determined according to whether the first identity is included in the wake-up data.

In an embodiment, the indication information includes the first identity corresponding to the second communication node and the starting position of the first identity, and the determination module 620 is configured to perform the operation below.

The operating state of the second communication node is determined according to whether the first identity exists after the starting position of the first identity in the wake-up data.

In an embodiment, the indication information includes the first identity corresponding to the second communication node and the ending position of the first identity, and the determination module 620 is configured to perform the operation below.

The operating state of the second communication node is determined according to whether the first identity exists before the ending position of the first identity in the wake-up data.

In an embodiment, the indication information includes the group index, and the determination module 620 is configured to perform the operation below.

The operating state of the second communication node is determined according to a value of a bit corresponding to the group index in the wake-up data.

In an embodiment, the indication information includes the group index and the intra-group position, and the determination module 620 is configured to perform one of the operations below.

The operating state of the second communication node is determined according to the value of the bit corresponding to the group index and a value of a bit corresponding to the intra-group position in the wake-up data.

The operating state of the second communication node is determined according to whether the group index is included in the wake-up data.

The operating state of the second communication node is determined according to whether the group index is included in the wake-up data and a value of a bit corresponding to the intra-group position in the wake-up data.

In an embodiment, the indication information includes the group index and the second identity, and the determination module 620 is configured to perform one of the operations below.

The operating state of the second communication node is determined according to whether the group index is included in the wake-up data.

The operating state of the second communication node is determined according to whether the group index is included in the wake-up data and whether the second identity is included in the wake-up data.

In an example embodiment, an embodiment of the present application provides a first communication node. FIG. 7 is a structural diagram of a first communication node according to an embodiment of the present application. Referring to FIG. 7, the first communication node of the present application includes one or more processors 71 and a storage apparatus 72. The one or more processors 71 may be provided in the first communication node, with one processor 71 as an example in FIG. 7. The storage apparatus 72 is configured to store one or more programs. The one or more programs, when executed by the one or more processors 71, cause the one or more processors 71 to perform the method of the embodiment of the present application shown in FIG. 1.

The first communication node further includes a communication apparatus 73, an input apparatus 74, and an output apparatus 75.

The processor 71, the storage apparatus 72, the communication apparatus 73, the input apparatus 74, and the output apparatus 75 in the first communication node may be connected via a bus or in other manners, with the connection via a bus as an example in FIG. 7.

The input apparatus 74 may be configured to receive inputted digital or character information and generate key signal input related to user settings and function control of the first communication node. The output apparatus 75 may include a display device such as a display screen.

The communication apparatus 73 may include a receiver and a sender. The communication apparatus 73 is configured to perform information transceiving communication under the control of the processor 71.

As a computer-readable storage medium, the storage apparatus 72 may be configured to store software programs, computer-executable programs, and modules, such as program instructions/modules (for example, the determination module 510 and the first sending module 520 in the transmission apparatus) corresponding to the method of the embodiment of the present application shown in FIG. 1. The storage apparatus 72 may include a program storage region and a data storage region. The program storage region may store an operating system and an application program required by at least one function. The data storage region may store data created depending on use of the first communication node. Additionally, the storage apparatus 72 may include a high-speed random-access memory and may further include a nonvolatile memory, such as at least one magnetic disk memory, a flash memory, or another nonvolatile solid-state memory. In some examples, the storage apparatus 72 may further include memories which are remotely disposed relative to the processor 71. These remote memories may be connected to the first communication node via a network. Examples of the network include, but are not limited to, the Internet, an intranet, a local area network, a mobile communication network, and a combination thereof.

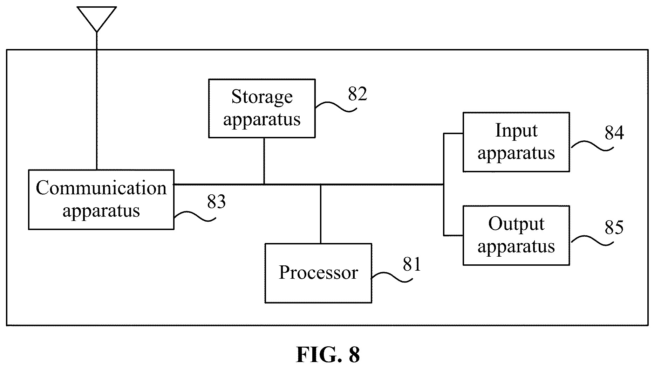

In an example embodiment, an embodiment of the present application provides a second communication node. FIG. 8 is a structural diagram of a second communication node according to an embodiment of the present application. Referring to FIG. 8, the second communication node of the present application includes one or more processors 81 and a storage apparatus 82. The one or more processors 81 may be provided in the second communication node, with one processor 81 as an example in FIG. 8. The storage apparatus 82 is configured to store one or more programs. The one or more programs, when executed by the one or more processors 81, cause the one or more processors 81 to perform the method of the embodiment of the present application shown in FIG. 3.

The second communication node further includes a communication apparatus 83, an input apparatus 84, and an output apparatus 85.

The processor 81, the storage apparatus 82, the communication apparatus 83, the input apparatus 84, and the output apparatus 85 in the second communication node may be connected via a bus or in other manners, with the connection via a bus as an example in FIG. 8.

The input apparatus 84 may be configured to receive inputted digital or character information and generate key signal input related to user settings and function control of the second communication node. The output apparatus 85 may include a display device such as a display screen.

The communication apparatus 83 may include a receiver and a sender. The communication apparatus 83 is configured to perform information transceiving communication under the control of the processor 81.

As a computer-readable storage medium, the storage apparatus 82 may be configured to store software programs, computer-executable programs, and modules, such as program instructions/modules (for example, the receiving module 610 and the determination module 620 in the transmission apparatus) corresponding to the method of the embodiment of the present application shown in FIG. 3. The storage apparatus 82 may include a program storage region and a data storage region. The program storage region may store an operating system and an application program required by at least one function. The data storage region may store data created depending on use of the second communication node. Additionally, the storage apparatus 82 may include a high-speed random-access memory and may further include a nonvolatile memory, such as at least one magnetic disk memory, a flash memory, or another nonvolatile solid-state memory. In some examples, the storage apparatus 82 may further include memories which are remotely disposed relative to the processor 81. These remote memories may be connected to the second communication node via a network. Examples of the network include, but are not limited to, the Internet, an intranet, a local area network, a mobile communication network, and a combination thereof.

In an example embodiment, an embodiment of the present application provides a storage medium having a computer program stored thereon, where the computer program, when executed by a processor, causes the processor to perform any method of the present application. The storage medium stores the computer program, where the computer program, when executed by the processor, causes the processor to perform the transmission method of any embodiment of the present application, such as a transmission method applied to a first communication node and a transmission method applied to a second communication node. The transmission method applied to the first communication node includes determining a wake-up signal including at least a wake-up preamble and wake-up data; and sending the wake-up signal.

The transmission method applied to the second communication node includes receiving a wake-up signal including at least wake-up data; determining indication information; and determining an operating state of the second communication node according to at least the indication information and the wake-up signal.

A computer storage medium of an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. Concrete examples (a non-exhaustive list) of the computer-readable storage medium include an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disk read-only memory (CD-ROM), an optical memory, a magnetic memory, and any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier, where the data signal carries computer-readable program codes. The data signal propagated in this manner may be in multiple forms, including, but not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included on the computer-readable medium may be transmitted by any suitable medium including, but not limited to, a wireless medium, a wire, an optical cable, a radio frequency (RF), or any suitable combination thereof.

Computer program codes for performing operations of the present application may be written in one or more programming languages or a combination thereof. The programming languages include object-oriented programming languages such as Java, Smalltalk, and C++ and may further include conventional procedural programming languages such as "C" or similar programming languages. The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer via any type of network including a local area network (LAN) or a wide area network (WAN) or may be connected to an external computer (for example, via the Internet provided by an Internet service provider).

The preceding are example embodiments of the present application and are not intended to limit the scope of the present application.

It is to be understood by those skilled in the art that the term "terminal device" encompasses any suitable type of wireless user equipment, such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a ROM, a RAM, or an optical memory device and system (for example, a digital video disc (DVD) or a compact disk (CD)). The computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The example embodiments of the present application have been described in detail through exemplary and non-limiting examples. However, considering the drawings and the claims, various modifications and adjustments to the preceding embodiments are apparent to those skilled in the art and do not deviate from the scope of the present application. Accordingly, the proper scope of the present application is determined according to the claims.

## Claims

1. A transmission method, which is applied to a first communication node, comprising:
determining a wake-up signal, wherein the wake-up signal at least comprises wake-up data; and
sending the wake-up signal.

2. The transmission method of claim 1, wherein the wake-up data at least comprises wake-up indications of N second communication nodes, and a value of N comprises at least one of a fixed value, a preset value, a value indicated via signaling, or the number of second communication nodes to be woken up.

3. The transmission method of claim 2, wherein each wake-up indication of the wake-up indications is one of:
an indication of whether a corresponding second communication node is woken up;
an indication of a position of the wake-up indication in the wake-up data;
an indication of a position of a woken second communication node in the N second communication nodes; or
a first identity of a second communication node of the N second communication nodes.

4. The transmission method of claim 1, wherein the wake-up data comprises at least one of a group identity or an intra-group wake-up indication corresponding to a second communication node.

5. The transmission method of claim 4, wherein the group identity comprises group indications corresponding to M groups, and a value of M comprises at least one of: a fixed value, a preset value, or a value indicated via signaling.

6. The transmission method of claim 5, wherein each group indication of the group indications is one of:
an indication of whether a group comprises a second communication node to be woken up; or
an indication of a group index corresponding to a group where a second communication node to be woken up is located.

7. The transmission method of claim 6, wherein the intra-group wake-up indication is one of:
an indication of whether the corresponding second communication node in the group is woken up; or
a second identity of the second communication node.

8. The transmission method of claim 1, wherein a length of the wake-up data is one of: a first length, a second length, ..., or a Z-th length, wherein the Z-th length is a preset value or a value configured via signaling, and Z is a positive integer.

9. The transmission method of claim 1, further comprising: sending indication information to a second communication node via first signaling;
wherein the indication information comprises at least one of: position information of the second communication node, a first identity of the second communication node, a starting position of a first identity, an ending position of a first identity, a group index corresponding to the second communication node, an intra-group position corresponding to the second communication node in a group, or an intra-group second identity corresponding to the second communication node; and
wherein the first signaling comprises at least one of system information block, SIB, signaling or radio resource control, RRC, signaling.

10. The transmission method of any one of claims 2 to 9, wherein the wake-up data further comprises first information comprising at least one of: a system message change indication, a cell index, an Earthquake and Tsunami Warning System, ETWS, and Commercial Mobile Alert Service, CMAS, message indication, a subsequent detection stop indication, or a tracking reference signal, TRS, indication.

11. A transmission method, which is applied to a second communication node, comprising:
receiving a wake-up signal, wherein the wake-up signal at least comprises wake-up data; and
determining an operating state of the second communication node at least according to indication information and the wake-up signal.

12. The transmission method of claim 11, wherein the indication information is obtained via first signaling, wherein the first signaling comprises at least one of system information block, SIB, signaling or radio resource control, RRC, signaling.

13. The transmission method of claim 11, wherein the indication information comprises at least one of: position indication information, a first identity, a starting position of a first identity, an ending position of the first identity, a group index, an intra-group position, or a second identity.

14. The transmission method of claim 11, wherein the indication information comprises position indication information, and determining the operating state of the second communication node according to at least the indication information and the wake-up signal comprises:
acquiring a wake-up indication at a position of the wake-up data indicated by the position indication information; and
determining the operating state of the second communication node according to the wake-up indication.

15. The transmission method of claim 11, wherein the indication information comprises position indication information, and determining the operating state of the second communication node according to at least the indication information and the wake-up signal comprises:
determining the operating state of the second communication node according to whether the position indication information is comprised in the wake-up data.

16. The transmission method of claim 11, wherein the indication information comprises a first identity corresponding to the second communication node, and determining the operating state of the second communication node according to at least the indication information and the wake-up signal comprises:
determining the operating state of the second communication node according to whether the first identity is comprised in the wake-up data.

17. The transmission method of claim 11, wherein the indication information comprises a first identity corresponding to the second communication node and a starting position of the first identity, and determining the operating state of the second communication node according to at least the indication information and the wake-up signal comprises:
determining the operating state of the second communication node according to whether the first identity exists after the starting position of the first identity in the wake-up data.

18. The transmission method of claim 11, wherein the indication information comprises a first identity corresponding to the second communication node and an ending position of the first identity, and determining the operating state of the second communication node according to at least the indication information and the wake-up signal comprises:
determining the operating state of the second communication node according to whether the first identity exists before the ending position of the first identity in the wake-up data.

19. The transmission method of claim 11, wherein the indication information comprises a group index, and determining the operating state of the second communication node according to at least the indication information and the wake-up signal comprises:
determining the operating state of the second communication node according to a value of a bit corresponding to the group index in the wake-up data.

20. The transmission method of claim 11, wherein the indication information comprises a group index and an intra-group position, and determining the operating state of the second communication node according to at least the indication information and the wake-up signal comprises one of:
determining the operating state of the second communication node according to a value of a bit corresponding to the group index and a value of a bit corresponding to the intra-group position in the wake-up data;
determining the operating state of the second communication node according to whether the group index is comprised in the wake-up data; or
determining the operating state of the second communication node according to whether the group index is comprised in the wake-up data and a value of a bit corresponding to the intra-group position in the wake-up data.

21. The transmission method of claim 11, wherein the indication information comprises a group index and a second identity, and determining the operating state of the second communication node according to at least the indication information and the wake-up signal comprises one of:
determining the operating state of the second communication node according to whether the group index is comprised in the wake-up data; or
determining the operating state of the second communication node according to whether the group index is comprised in the wake-up data and whether the second identity is comprised in the wake-up data.

22. A first communication node, comprising:
at least one processor, and
a storage apparatus configured to store at least one program,
wherein the at least one program, when executed by the at least one processor, causes the at least one processor to perform the transmission method of any one of claims 1 to 10.

23. A second communication node, comprising:
at least one processor, and
a storage apparatus configured to store at least one program,
wherein the at least one program, when executed by the at least one processor, causes the at least one processor to perform the transmission method of any one of claims 11 to 21.

24. A storage medium having a computer program stored thereon, wherein the computer program, when executed by a processor, causes the processor to perform the transmission method of any one of claims 1 to 21.
